(19) **Europäisches Patentamt European Patent Office Office européen des brevets**

(11) **EP 4 154 043 B1**

(12) **EUROPEAN PATENT SPECIFICATION**

(45) Date of publication and mention
of the grant of the patent:
**14.05.2025 Bulletin 2025/20**

(21) Application number: **21727442.2**

(22) Date of filing: **19.05.2021**

(51) International Patent Classification (IPC):
***G02B 5/18*** (2006.01)

(52) Cooperative Patent Classification (CPC):
**G02B 5/18; G02B 5/1847**

(86) International application number:
**PCT/EP2021/063239**

(87) International publication number:
**WO 2021/233968 (25.11.2021 Gazette 2021/47)**

(54) **HIGH COLOR UNIFORMITY DOUBLE MATERIAL DIFFRACTION GRATING COMPRISING STEP-LIKE CAVITIES**

DOPPELMATERIALBEUGUNGSGITTER MIT HOHER FARBUNIFORMITÄT UND STUFENFÖRMIGEN HOHLRÄUMEN

RÉSEAU DE DIFFRACTION À DOUBLE MATÉRIAU À UNIFORMITÉ DE COULEUR ÉLEVÉE COMPRENANT DES CAVITÉS EN FORME DE GRADIN

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.05.2020 EP 20305538**

(43) Date of publication of application:
**29.03.2023 Bulletin 2023/13**

(73) Proprietor: **InterDigital CE Patent Holdings, SAS 75017 Paris (FR)**

(72) Inventors:
 • **SHRAMKOVA, Oksana**
   **35576 Cesson-Sévigné (FR)**
 • **BLONDE, Laurent**
   **35576 Cesson-Sévigné (FR)**
 • **DRAZIC, Valter**
   **35576 Cesson-Sévigné (FR)**

(74) Representative: **AWA Sweden AB Box 5117 200 71 Malmö (SE)**

(56) References cited:
 **EP-A1- 2 031 425      EP-A2- 0 898 182**
 **WO-A1-2015/062641     KR-A- 20190 073 107**

**Description**

**CROSS-REFERENCE TO RELATED APPLICATIONS**

The present application claims the priority of European Patent Application No. 20305538.9, filed 22 May 2020, entitled "High Color Uniformity Double Material Diffraction Grating Comprising Step-Like Cavities,".

**BACKGROUND**

The present disclosure relates to the field of optics and photonics, and more specifically to optical device comprising at least one diffraction grating. It may find applications in the field of conformable and wearable optics (e.g. ARNR glasses (Augmented RealityNirtual Reality)), as well as in a variety of other electronic consumer products comprising displays and/or lightweight imaging systems, including head up displays (HUD), as for example in the automotive industry.

This section is intended to introduce the reader to various aspects of art, which may be related to various aspects of the present disclosure that are described and/or claimed below. This discussion is believed to be helpful in providing the reader with background information to facilitate a better understanding of the various aspects of the systems and methods described herein. Accordingly, it should be understood that these statements are to be read in this light and not as admissions of prior art.

With the advent of nanotechnology, the ever-increasing interest in exploring the optical world at nanoscale has presented the desire to manipulate visible light in the subwavelength scale. Researchers have made significant efforts to decrease the size of optical lenses to micron and submicron scale for this very purpose; however, due to the diffraction limit, their efforts are hindered when the size of a lens approaches the wavelength of the light.

The planar lens, thanks to its small thickness and excellent focusing capability, has been developed to replace its thicker dielectric counterpart as a paradigmatic nanophotonic component. Several types of planar lenses have been studied so far, for example zone plates, nano-slit and nano-hole arrays, photonics crystals and metasurfaces. Although different terminologies are used in the aforementioned techniques, they share the same principle of focusing, which is to generate a constructive interference at the focal point by curving the phase front of an incident plane wave. Actually, the focusing (or beam forming) of electromagnetic waves is an established way to increase locally the magnitude of the electric field and, in such a way, to enhance efficiency of sensors, e.g. electro-optical sensors whose operational principles rely on the conversion of the energy propagating in space in the form of an electromagnetic wave into an output voltage or current.

The performance of planar lenses has been improved through sophisticated designs. However, most of the proposals so far lack the possibility to control the focal spot position or to change the orientation of an electromagnetic beam.

There are a number of optical devices, which comprise components enabling light focusing and deviating functions. Among those are digital image sensors used in various photo/video cameras, optical combiners used in AR/VR glasses, and light guiding systems being the essential part of various light capturing and light processing devices. There are also some components, which are able to perform both functions simultaneously, such as asymmetric dielectric lenses, diffractive lenses and diffractive gratings.

Transformation Optics (TO) allows the possibility of controlling electromagnetic (EM) fields through the use of judiciously engineered materials with parameters that vary spatially. Such flexibility in controlling EM waves appears to be convenient in the design of novel devices with performance or special desired properties that have been difficult to achieve.

A lens providing the possibility of changing the direction of propagation of an electromagnetic radiated beam was proposed by J. Yi et al. in "Coherent beam control with an all-dielectric transformation optics based lens," Scientific Reports, Vol. 6, Article number : 18819 (2016).

The excitation source transmits through the lens corresponding to the transformed medium, which deflects the beam away from the normal direction. The all-dielectric compact low-cost lens prototype presenting a graded permittivity profile was fabricated through three-dimensional (3D) polyjet printing technology. The array of radiators was composed of four planar microstrip antennas realized using standard lithography techniques and was used as excitation source for the lens.

One possible method that enables the manipulation of visible light in the subwavelength scale uses surface plasmons; these surface plasmon-based lenses, or so-called plasmonic lenses, can achieve subwavelength-scale focal zones. However, to fully realize the potential of plasmonic lenses, it is necessary to not only focus light, but also to manipulate and precisely position it at small scales. In "Beam bending via plasmonic lenses", Opt. Expr., Vol. 18, No. 22 23458 (2010), Ya. Zhao et al. aimed to provide a more practical method to achieve directional modulation with a plasmonic lens. A design principle for plasmonic lenses that can bend light along the direction transverse to the propagation direction was proposed. Light bending is achieved by constructing a carefully designed, curved, phase front for the plasmonic lenses. The control of the phase front profile is achieved through two mechanisms: phase retardation caused by the width and shape of the individual slits in the lens, and the position of these slits. The proposed single-layered lenses can be conveniently fabricated using Focused Ion Beam (FIB) techniques.

Near-field optical trapping of objects using plasmonic antenna structures has recently attracted attention. However, metal nanostructures also provide a compact platform for general wavefront engineering of intermediate and far-field beams. In "Optical Manipulation with Plasmonic Beam Shaping Antenna Structures" (Advances in Optoelectronics, vol. 2012, Article ID 595646), Yo. C. Jun et al. analyze optical forces generated by plasmonic beam shaping antenna structures and show that they can be used for general optical manipulation such as guiding of a dielectric particle along a linear or curved trajectory. An asymmetric slit-groove structure generates a collimated beam at an angle. The different groove periods on either side generate constructive interference in the off-axis direction. Authors have also demonstrated that different wavelengths result in different interference conditions and beaming directions.

Metasurfaces can provide solutions to realize complex optical systems in a compact and planar configuration. The off-axis meta-lenses that simultaneously focus and disperse light of different wavelengths with high spectral resolution were presented in M. Khorasaninejad et al., "Super-Dispersive Off-Axis Meta-Lenses for Compact High Resolution Spetrcoscopy" (Nano Lett., Vol. 16, No. 6, 3732 (2016)). They are designed based on the geometric phase via rotated silicon nanofins and can focus light at angles as large as 80°.

Various strategies have emerged to enable the tunability of planar lens, in which one wants to manipulate the transmitted phase front from a predefined structure. For instance, varying the angle of the incident light was demonstrated to tune the focal position of a plasmonic lens by Liu Z. et al. in "Tuning the focus of a plasmonic lens by the incident angle" (Appl. Phys. Lett., Vol. 88, 171108 (2006)). The inclusion of active tunability in static plasmonic devices can enhance their functionality. Index-variable materials are often incorporated in plasmonic devices and optical metasurfaces, including liquid crystals, vanadium dioxide, silicon and other materials. Thus, one may manipulate the optical phase of the guided modes excited in graded-index metalenses in order to achieve a certain degree of tunability in the focusing behavior of the photonic device. A planar metalens that consists of an array of slits that are filled with phase-change material $Ge_2 SB_2 Te_5$ (GST) has also been proposed to engineer the far-field focusing patterns in "Engineering the phase front of light with phase-change material based planar lenses" by Y. Chen et al (Sci. Rep., Vol. 5, Article number: 8660 (2015)).

The functionality of plasmonic lenses in optical wavelength range can suffer from high absorption losses. There are also some fabrication difficulties reducing the effectiveness of the proposed topologies. The possible solution of this problem enabling the required functionality of controlling both the position and deviation of an electromagnetic beam can be found using dielectric materials.

There is also a number of near-field focusing components enabling sub-wavelength resolution but not fully capable of producing a light deviation function. A photonic nanojet (NJ) is a narrow high-intensity optical radiation flux formed in the proximity to the shadow surface of illuminated transparent dielectric symmetric bodies with a diameter comparable to or somewhat larger than the wavelength of the incident optical radiation. The physical origin of photonic nanojet formation arises from the interference (both constructive and destructive) of the radiation net fluxes diffracted and passed through a particle (see for example "Photonic nanojet-enabled optical data storage by S.-C. Kong et al. (Opt. Express, Vol. 16, No. 18, 2008), patent document US 7 394 535, "Terajets produced by dielectric cuboids" by V. Pacheco-Pena et al. (Applied Phys. Lett., Vol. 105, 084102, 2014) and "Multifrequency focusing and wide angular scanning of terajets" by V. Pacheco-Pena et al. (Opt. Lett. Vol. 40, No. 2, pp. 245-248, 2015)).

One feature of photonic nanojets is the high spatial localization of the light field in the longitudinal direction (relative to the direction of incidence), which, in contrast to conventional high-NA (Numerical Aperture) focusing optics, can lead to the subwavelength dimensions of the photonic jet. The common interest to the nanojet effect is mostly caused by the promises of its practical application in nanophotonics, biology, medicine, and nanoelectronics. The principles of functioning of some devices are based on the ability of the nanojet to provide the high intensity of the electromagnetic field in a localized spatial region near a microparticle and on high sensitivity to perturbations of both the field and material origin.

The problems of controlled nanojet characteristics' manipulation and the creation of thinner or longer and intensive jets by variation of optical element properties attract a growing interest. Both the nanojet shape and intensity depend significantly on the size and optical properties of a generating microparticle (see for example "Optics of photonic nanojets" by A.V. Itagi et al. (J. Opt. Soc. Am. A, Vol. 22, 2847 (2005)), "Subdiffraction optical resolution of a gold nanosphere located within the nanojet of a Mie-resonant dielectric microsphere" by A. Heifetz et al. (Opt. Express, Vol. 15, 17334 (2007), and "Three-dimensional subwavelength confinement of light with dielectric microspheres" by A. Devilez et al. (Opt. Express, Vol. 17, 2089 (209)).

Moreover, if the nanojet is produced by a composite radially inhomogeneous particle consisting of several concentric shells with different refractive indices (see for example "Ultralong photonic nanojet formed by a two-layer dielectric microsphere" by Yu Shen et al. (Opt. Lett., Vol. 39, No. 14, 4120 (2014), "Detection of embedded ultra-subwavelength-thin dielectric features using elongated photonic nanojets" by C.M. Riuz et al. (Opt. Express, Vol. 18, No. 16, 16805 (2010), "Photonic nanojet calculations in layered radially inhomogeneous micrometer-sized spherical particles" by Yu E. Geints et al. (J. Opt. Soc. Am. B, Vol. 28, No. 8, 1825 (2011) and "Super-long photonic nanojet generated from liquid-filled hollow microcylinder" by G. Gu et al. (Opt. Lett., Vol. 40, No. 4, 625 (2015)) or graded refractive index material ("Tunable photonic nanojet formed by generalized Luneburg lens" by X. Mao et al. (Opt. Expre. Vol. 23, No. 20, 026426 (2015)), then the nanojet characteristics can be changed significantly, in particular, it becomes possible to elongate the photonic jet abnormally and also to amplify further the electrical field.

ARNR glasses are under consideration for a new generation of human-machine interface. Development of AR/VR glasses (and more generally eyewear electronic devices) is associated with a number of challenges, including reduction of size and weight of such devices as well as improvement of the image quality (in terms of contrast, field of view, color depth, etc.) that should be realistic enough to enable a truly immersive user experience.

The tradeoff between the image quality and physical size of the optical components motivates research into ultra-compact optical components that can be used as building blocks for more complex optical systems, such as ARNR glasses. It is desirable for such optical components to be easy to fabricate and replicate.

In such ARNR glasses, various types of refractive and diffractive lenses and beam-forming components are used to guide the light from a micro-display or a projector towards the human eye, allowing formation of a virtual image that is superimposed with an image of the physical world seen with a naked eye.

Some of kinds of ARNR glasses utilize an optical waveguide wherein light propagates into the optical waveguide by TIR (for Total Internal Reflection) only over a limited range of internal angles. The FoV (for Field of View) of the waveguide depends on the material of the waveguide, among other factors.

For instance, in WO2017180403, a waveguide with an extended field of view is proposed wherein a dual mode image propagation is used. In this method, the diffraction mode +1 is used to carry the right hand side image (negative angles of incidence on the in-coupler) in one direction, and the -1 mode is used to propagate the positive angles of incidence into the opposite direction into the waveguide. In WO2017180403, combining both half images is done thanks to the pupil expanders and out-couplers at the exit of the waveguide so that the user sees one single image. The goal of the system is to double the field of view since each half image can use the whole angular bandwidth of the waveguide in each direction of propagation.

Using diffraction orders higher than one has the effect of multiplying the wavelength by the diffraction order that is used in the diffraction equation. As the grating pitch is directly a function of the product M$\lambda$, this means that the grating pitch is multiplied by M. A grating density with fewer lines per millimeter can be used, and the fabrication process can be simplified by using over-wavelength structures rather than sub-wavelength.

An optical waveguide using both $\pm 2$ diffraction orders provides a FoV of about 60° with a refractive index of 1.52. It is thus possible to get a 60° field of view using a material with refractive index 1.52, instead of 2 in single mode. However, a 60° FoV is still limited with respect to the total human field of view where stereopsis is effective for human vision and which is about 114°.

Waveguide-based ARNR glasses can exhibit a wide field of view along one direction (e.g. in a horizontal direction) but may have a narrower field of view along another direction (e.g. in a vertical direction). However, because ARNR applications generally call for particular aspect ratios, a limitation of the field of view along one direction may, for practical purposes, effectively limit the field of view along the other direction. KR20190073107A also describes diffraction gratings of the prior art.

## SUMMARY

References in the specification to "one embodiment," "an embodiment," "an example embodiment," and the like indicate that the embodiment described may include a particular feature, structure, or characteristic; but not every embodiment necessarily includes that particular feature, structure, or characteristic. Moreover, such phrases are not necessarily referring to the same embodiment. Further, when a particular feature, structure, or characteristic is described in connection with an embodiment, such feature, structure, or characteristic may be used in connection with other embodiments whether or not explicitly described.

A diffraction grating according to claim 1 comprises: a substrate having an outer surface, the substrate having a first refractive index; and a plurality of grating elements, each grating element comprising a stepped channel inset into the substrate, the stepped channel having a second refractive index greater than the first refractive index. The stepped channel is a two-step channel having a first step along the outer surface of the substrate and a second step extending inward from the first step, the first step having a greater width than the second step.

A method of making a diffraction grating according to claim 7 comprises: forming a plurality of stepped channels in an outer surface of a substrate having a first refractive index; and filling each of the stepped channels with a material having a second refractive index greater than the first refractive index. Each of the stepped channels is a two-step channel having a first step along the outer surface of the substrate and a second step extending inward from the first step, the first step having a greater width than the second step.

In some embodiments, the stepped channel has an outer surface substantially coplanar with the outer surface of the substrate.

In some embodiments, the width of the first step is substantially twice as great as the width of the second step.

In some embodiments, a side edge of the first step is substantially aligned with a side edge of the second step.

In some embodiments, the first step has a width W and a height $h_1$, wherein

$$h_1 \approx \frac{W}{2\, tan\, \Theta_R}$$

and wherein $\Theta_B \approx \dfrac{90^\circ - \Theta_{TIR}}{2}$ , with $\Theta_{TIR} = \sin^{-1}\left(\dfrac{n_L}{n_H}\right)$ , where $n_L$ is the first refractive index and $n_H$ is the second refractive index.

In all embodiments, the height $h_2$ of the stepped channel is less than twice the height $h_1$ of the first step.

In some embodiments, the substrate is a waveguide in a waveguide display.

## BRIEF DESCRIPTION OF THE DRAWINGS

FIG. 1A is a cross-sectional schematic view of a waveguide display.

FIG. 1B is a schematic illustration of a binocular waveguide display with a first layout of diffractive optical components.

FIG. 1C is a schematic illustration of a binocular waveguide display with a second layout of diffractive optical components.

FIG. 1D is a schematic exploded view of a double-waveguide display according to some embodiments.

FIG. 1E is a cross-sectional schematic view of a double-waveguide display according to some embodiments.

FIG. 2 is a cross-sectional view illustrating two unit cells in a diffraction grating according to some embodiments. The grating element may be described as a step-like optical element.

FIG. 3A is cross-sectional view of a unit cell in a diffraction grating according to some embodiments.

FIG. 3B is cross-sectional view of a unit cell in a diffraction grating according to additional embodiments.

FIG. 4A is a cross sectional view of a portion of a diffraction grating according to some embodiments. Although three unit cells are illustrated in FIG. 4A, a diffraction grating according to some embodiments may include an array of tens, hundreds, or thousands of unit cells.

FIG. 4B is a schematic cutaway perspective view of a portion of a diffraction grating as in FIG. 4A according to some embodiments.

FIGs. 5A-5C are graphs showing simulated results for reflectance and transmittance plotted against angle of electromagnetic wave incidence $\alpha$. In all simulations, $\lambda$=625nm, d=494nm, $n_1$=1.0, $n_3$ =1.5154. In FIG. 5A, $n_2$=2.8, W=300nm, $h_1$=255nm, $h_2$=475nm. In FIG. 5B, $n_2$=2.6, W=300nm, $h_1$=295nm, $h_2$=500nm. In FIG. 5C, $n_2$=2.4, W= 380nm, $h_1$=420nm, $h_2$=680nm.

FIGs. 6A-6D are schematic cross-sectional views of a portion of a diffraction grating and substrate at progressive stages in a manufacturing process according to some embodiments.

FIGs. 7A and 7B illustrate simulated values of reflectance and transmittance versus angle (shown here in radians) of electromagnetic wave incidence (a) for $n_1$=1.0, $n_2$=2.8, $n_3$ =1.5154. In FIG. 7A, $\lambda$=460nm, d=365.7nm, W=220nm, $h_1$=190nm, $h_2$=350nm. In FIG. 7B, $\lambda$=530nm, d=421.4 nm, W=260nm, $h_1$=220nm, $h_2$=400nm.

## DETAILED DESCRIPTION

### Overview of Waveguide Displays.

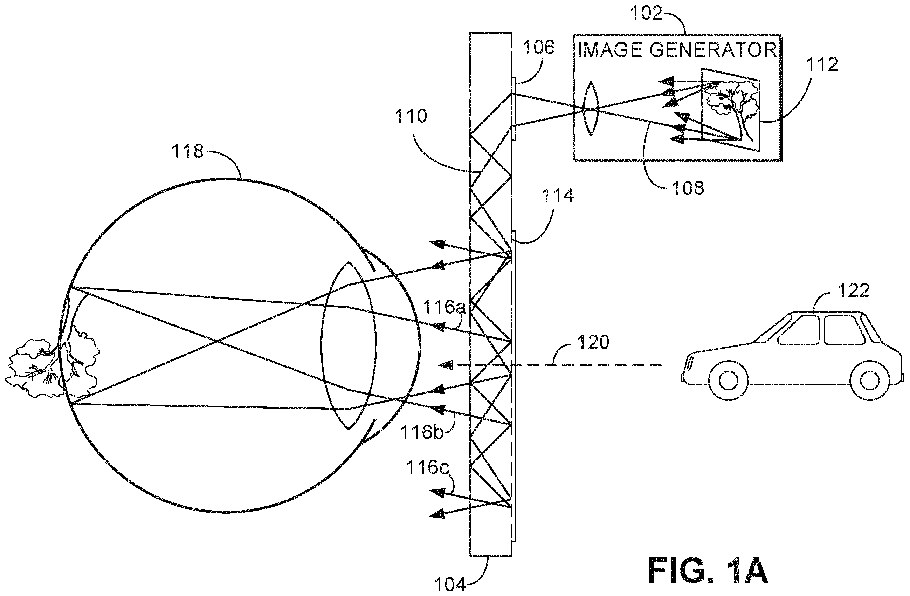

Described herein are systems and methods that can be employed in optical waveguide devices. An example waveguide display device is illustrated in FIG. 1A. FIG. 1A is a schematic cross-sectional side view of a waveguide display device in operation. An image is projected by an image generator 102. The image generator 102 may use one or more of various techniques for projecting an image. For example, the image generator 102 may be a laser beam scanning (LBS) projector, a liquid crystal display (LCD), a light-emitting diode (LED) display (including an organic LED (OLED) or micro LED (μLED) display), a digital light processor (DLP), a liquid crystal on silicon (LCoS) display, or other type of image generator or light engine.

Light representing an image 112 generated by the image generator 102 is coupled into a waveguide 104 by a diffractive in-coupler 106. The in-coupler 106 diffracts the light representing the image 112 into one or more diffractive orders. For example, light ray 108, which is one of the light rays representing a portion of the bottom of the image, is diffracted by the in-coupler 106, and one of the diffracted orders 110 (e.g. the second order) is at an angle that makes it capable of being propagated through the waveguide 104 by total internal reflection.

At least a portion of the light 110 that has been coupled into the waveguide 104 by the diffractive in-coupler 106 is coupled out of the waveguide by a diffractive out-coupler 114. At least some of the light coupled out of the waveguide 104 replicates the incident angle of light coupled into the waveguide. For example, in the illustration, out-coupled light rays 116a, 116b, and 116c replicate the angle of the in-coupled light ray 108. Because light exiting the out-coupler replicates the directions of light that entered the in-coupler, the waveguide substantially replicates the original image 112. A user's eye 118 can see the replicated image.

In the example of FIG. 1A, the out-coupler 114 out-couples only a portion of the light with each reflection allowing a single input beam (such as beam 108) to generate multiple parallel output beams (such as beams 116a, 116b, and 116c). In this way, at least some of the light originating from each portion of the image is likely to reach the user's eye even if the eye is not perfectly aligned with the center of the out-coupler. For example, if the eye 118 were to move downward, beam 116c may enter the eye even if beams 116a and 116b do not, so the user can still perceive the bottom of the image 112 despite the shift in position. The out-coupler 114 thus operates in part as an exit pupil expander in the vertical direction. The waveguide may also include one or more additional exit pupil expanders (not shown in FIG. 1A) to expand the exit pupil in the horizontal direction.

In some embodiments, the waveguide 104 is at least partly transparent with respect to light originating outside the waveguide display. For example, at least some of the light 120 from real-world objects (such as object 122) traverses the waveguide 104, allowing the user to see the real-world objects while using the waveguide display. As light 120 from real-world objects also goes through the diffraction grating 114, there will be multiple diffraction orders and hence multiple images. To minimize the visibility of multiple images, it is desirable for the diffraction order zero (no deviation by 114) to have a great diffraction efficiency for light 120 and order zero, while higher diffraction orders are lower in energy. Thus, in addition to expanding and out-coupling the virtual image, the out-coupler 114 is preferably configured to let through the zero order of the real image. In such embodiments, images displayed by the waveguide display may appear to be superimposed on the real world.

In some embodiments, as described in further detail below, a waveguide display includes more than one waveguide layer. Each waveguide layer may be configured to preferentially convey light with a particular range of wavelengths and/or incident angles from the image generator to the viewer.

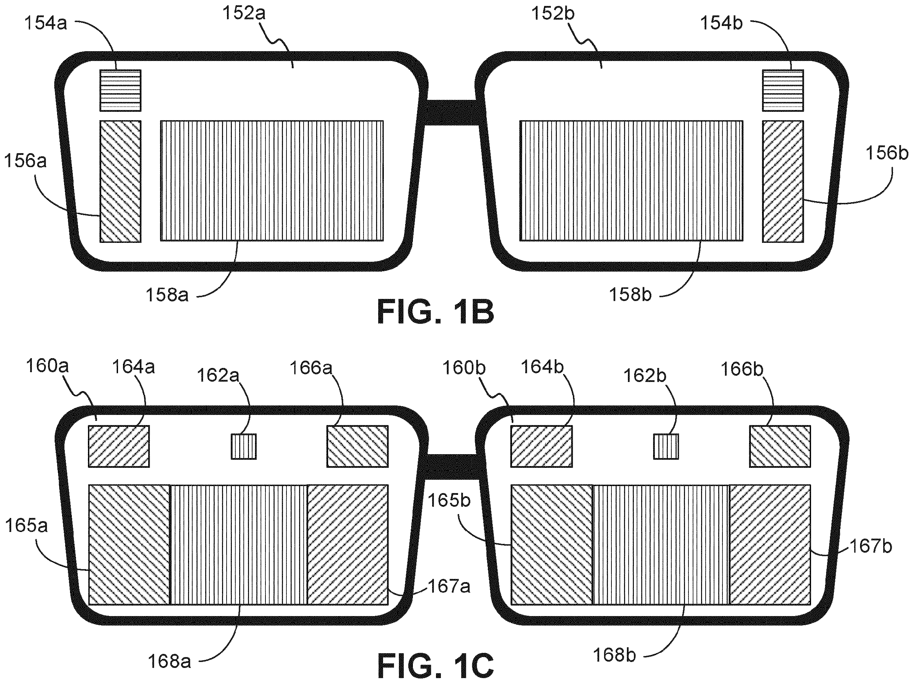

As illustrated in FIGs. 1B and 1C, waveguide displays having in-couplers, out-couplers, and pupil expanders may have various different configurations. An example layout of one binocular waveguide display is illustrated in FIG. 1B. In the example of FIG. 1B, the display includes waveguides 152a, 152b for the left and right eyes, respectively. The waveguides include in-couplers 154a,b, pupil expanders 156a,b, and components 158a,b, which operate as both out-couplers and horizontal pupil expanders. The pupil expanders 156a,b are arranged along an optical path between the in-coupler and the out-coupler. An image generator (not shown) may be provided for each eye and arranged to project light representing an image on the respective in-coupler.

An example layout of another binocular waveguide display is illustrated in FIG.1C. In the example of FIG. 1C, the display includes waveguides 160a, 160b for the left and right eyes, respectively. The waveguides include in-couplers 162a,b. Light from different portions of an image may be coupled by the in-couplers 162a,b to different directions within the waveguides. In-coupled light traveling toward the left passes through pupil expanders 164a,b, while in-coupled light traveling toward the right passes through pupil expanders 166a,b. Having passed through the pupil expanders, light is coupled out of the waveguides using components 168a,b, which operate as both out-couplers and vertical pupil expanders to substantially replicate an image provided at the in-couplers 162a,b.

In different embodiments, different features of the waveguide displays may be provided on different surfaces of the waveguides. For example (as in the configuration of FIG. 1A), the in-coupler and the out-coupler may both be arranged on the anterior surface of the waveguide (away from the user's eye). In other embodiments, the in-coupler and/or the out-coupler may be on a posterior surface of the waveguide (toward the user's eye). The in-coupler and out-coupler may be on opposite surfaces of the waveguide. In some embodiments, one or more of an in-coupler, an out-coupler, and a pupil expander, may be present on both surfaces of the waveguide. The image generator may be arranged toward the anterior surface or toward the posterior surface of the waveguide. The in-coupler is not necessarily on the same side of the waveguide as the image generator. Any pupil expanders in a waveguide may be arranged on the anterior surface, on the posterior surface, or on both surfaces of the waveguide. In displays with more than one waveguide layer, different layers may have different configurations of in-coupler, out-coupler, and pupil expander.

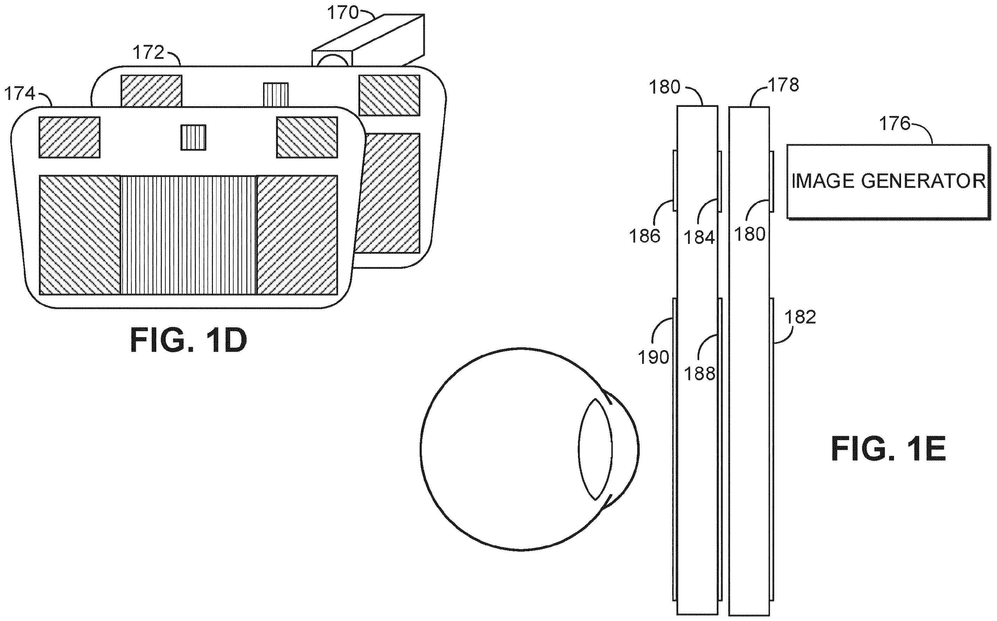

FIG. 1D is a schematic exploded view of a double waveguide display according to some embodiments, including an image generator 170, a first waveguide (WG$_1$) 172, and a second waveguide (WG$_2$) 174. FIG. 1E is a schematic side-view of a double waveguide display according to some embodiments, including an image generator 176, a first waveguide (WG$_1$) 178, and a second waveguide (WG$_2$) 180. The first waveguide includes a first transmissive diffractive in-coupler (DG1) 180 and a first diffractive out-coupler (DG6) 182. The second waveguide has a second transmissive diffractive in-coupler (DG2) 184, a reflective diffractive in-coupler (DG3) 186, a second diffractive out-coupler (DG4) 188, and a third diffractive out-coupler (DG5) 190. Different embodiments may use different arrangements of optical components (such as different arrangements of pupil expanders) on the first and second waveguides.

While FIGs. 1A-1E illustrate the use of waveguides in a near-eye display, the same principles may be used in other display technologies, such as head up displays for automotive or other uses.

## Overview of Diffractive Optical Elements.

The present disclosure relates to the field of optics and photonics, and more specifically to planar optical devices.

More particularly, but not exclusively, the present disclosure relates to diffraction gratings, containing near-field focusing and beam forming in the near-field zone elements, that can be used in a wide range of devices (as for example displays, including in and out coupling of light in waveguides for eyewear electronic devices and head-mounted displays for AR (Augmented Reality) and VR (Virtual Reality) glasses, optical sensors for photo/video/lightfield cameras, bio/chemical sensors, including lab-on-chip sensors, microscopy, spectroscopy and metrology systems, solar panels, etc.).

Some of the embodiments described herein provide a topology of a double material dielectric diffraction grating. In some embodiments, the topology provides a good diffraction efficiency and diffraction uniformity. In some embodiments, the optical element is protected from mechanical damage and degradation.

With the advent of nanotechnology, interest in exploring the optical world at nanoscale makes it desirable to manipulate visible light in the subwavelength scale. Researchers have made significant efforts to decrease the size of optical lenses to micron and submicron scale for this very purpose; however, due to the diffraction limit, their efforts are hindered when the size of a lens approaches the wavelength of the light.

The planar lens, thanks to its small thickness and excellent focusing capability, has been developed to replace its dielectric counterpart as a paradigmatic nanophotonic component. Several types of planar lenses have been studied so far, for example zone plates, nano-slit and nano-hole arrays, photonics crystals and metasurfaces. Although different terminologies are used in the aforementioned techniques, they share the same principle of focusing coherent waves, which is to generate a constructive interference at the focal point by curving the phase front of an incident plane wave. The performance of planar lenses has been improved through sophisticated designs. However, with the use of planar lenses, it can be difficult to control the focal spot position or to change the orientation of an electromagnetic beam.

It would be desirable to provide optical components enabling the focusing and deviation functions. Available solutions enabling such functionality, which are routinely used for optical applications, may not fully satisfy the needs of emerging nano-photonic applications due to their performance characteristics (e.g. chromatic aberrations and limited resolution) and fabrication difficulties.

Thus, the introduction of a new component enabling the desired light focusing and deviating functions is of a certain practical interest. Additional desired features for such a device are sub-wavelength resolution and simple topology compatible with established micro- and nano-fabrication techniques.

A diffraction grating optimized to achieve good grating efficiency in a diffraction order other than the zero order can provide light deviation functions in the far-field zone. Some embodiments include double-material optical elements deviating and focusing the incident light in the near-field zone for the purpose of a targeted light distribution in the far-field zone.

Nanojet-based near-field focusing components, based on a combination of different materials, were proposed in WO2019175010A1, "Diffraction grating comprising double-materials structures." Some embodiments described therein use the nanojet (NJ) concept. The nanojet beam forming optical element was created by a combination of at least two dielectric materials with different refractive indexes having a non-symmetrical system in a vertical cross-section. This transformation results in a deviation of a focused nanojet beam. It was demonstrated that such a property to deviate light by a double material system can advantageously be used in diffraction gratings. Changing the refractive indexes of constitutive parts, it is possible to modify the performance of the grating and dramatically increase the refracted transmittance for ±1st order. Known diffraction grating profiles include those illustrated in US 2016/0231568, where the diffraction grating consists in deep slanted structures.

It would also be desirable to provide a new optical device that would fully satisfy the needs of emerging nano-photonic applications in terms of performance characteristics and fabrication difficulties. In other words, it would also be desirable to provide such a new optical device with a topology that is compatible with established micro- and nano-fabrication techniques.

## Overview of Nanojet Optical Focusing.

Example embodiments provide nanojet-based focusing components capable of deviating the focused beam in the near and far zone. Such a property to deviate light by single component may advantageously be used in diffraction gratings with non-symmetrical distribution of an intensity ($T_j \neq T_{-j}$, $R_j \neq R_{-j}$, ...., where j is the diffraction order) to provide high grating efficiency for the desired diffraction order. In the proposed case of elements with $W \leq \lambda$ the maximal input corresponds to the orders $\pm 1$. Example embodiments provide high diffraction uniformity and efficiency of first order.

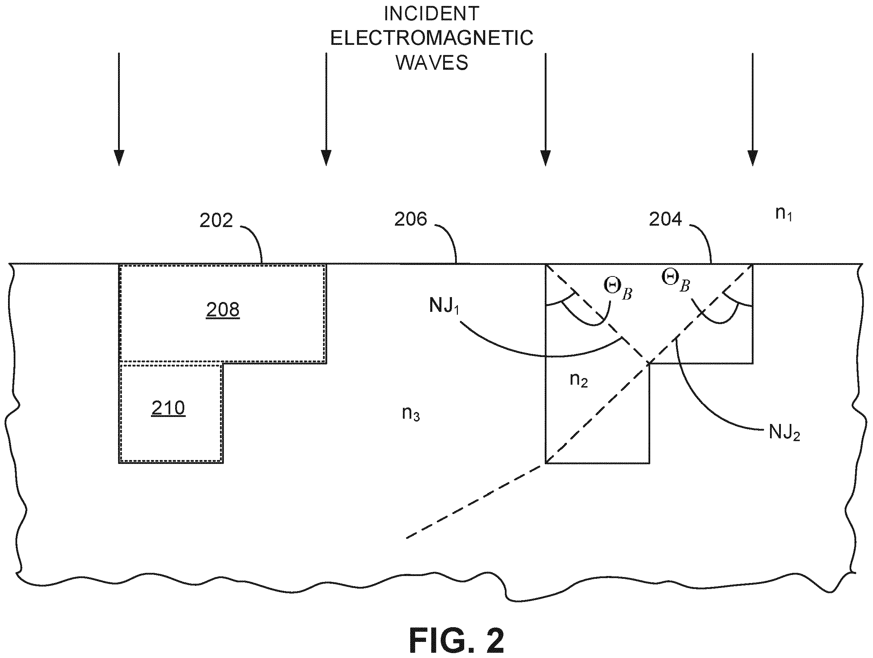

Example embodiments provide a topology of diffractive elements to control the position of the focused nanojet beam and change the direction of nanojet beam orientation. Some embodiments use an optical element with the step-like geometry. In some embodiments, a step-like topology provides the combination of the nanojet beams, originating from the edges of the system, contributing to the formation of a final nanojet beam deflected from the normal direction. The cross-section and focusing function are schematically represented in FIG. 2. The characteristics of the generated nanojet beams are controlled by the parameters of the corresponding parts of the step-like system, such as refractive index ratios between the dielectric materials forming the system, dimensions of the cavity, and angle of incidence of the illuminating wave.

Some embodiments include a diffraction grating for diffracting light comprising a plurality of grating unit cells with step-like optical elements. In some embodiments, the optical elements are positioned on a substrate surface. In other embodiments, the step-like optical elements include step-like cavities or channels in a substrate filled by the dielectric material having higher refractive index. The second variant of diffraction grating represents the optical element protected from the mechanical damage and may have a simpler fabrication process.

Example embodiments have been validated numerically via full-wave electromagnetic analysis of a 2D and 3D double-layer optical elements. For simplicity, the analysis assumed that all the materials are lossless and non-dispersive. The analysis has revealed that diffraction of a plane wave on an optical element based on the combination of different dielectric materials, can result in the deviation of the nanojet away from the normal direction in a case of normal incidence. The position of focal spot, angle of deviation, intensity and shape of nanojet beam can be controlled by the variation of the refractive indexes and sizes of the constitutive parts/blocks. The step-like diffraction grating achieves non-symmetrical distribution of an intensity leading to the high grating efficiency for the desired diffraction order. In some embodiments using elements with $W \leq \lambda$ $W \leq \lambda$ the maximal input corresponds to the orders $\pm 1$. Some embodiments demonstrate very high diffraction uniformity (about 95%) for the first diffracted order.

## Topology of Example Embodiments.

The general topology of the double-material optical element in some embodiments is illustrated in FIG. 2. FIG. 2 illustrates a cut-out portion of an optical component in which two grating elements 202 and 204 are shown inset into a substrate 206. Each grating element may be described as a stepped channel inset into the substrate. The grating elements have a refractive index $n_2$, which in some embodiments is greater than the refractive index $n_3$ of the substrate. The ambient medium may have a refractive index of $n_1$. Each grating element in this embodiment has two steps, with a first step 208 being arranged along (e.g. substantially coplanar with) the outer surface of the substrate and a second step 210 extending inward (downward, in FIG. 2) from the first step. The first and second steps may be contiguous with one another, with the dotted lines of FIG. 2 being shown only for the sake of clarity. In the embodiment of FIG. 2, the first step has a greater width than the second step. In an example embodiment, a side edge (the left side edge in FIG. 2) of the first step is aligned with the corresponding side edge of the second step.

The cross-sectional view of FIG. 2 thus corresponds to a single material step-like element with refractive indexes $n_2$ embedded in a homogeneous dielectric media with a refractive index $n_3$ ($n_2 > n_3$). The full system is placed inside the homogeneous host medium with refractive index $n_1$. In some cases, $n_1$ can be equal to $n_3$. Hereafter, the materials and size of the constitutive parts can be selected in order to manage the position of a nanojet hot spot and the intensity, direction and angle of deviation of a nanojet beam. Some embodiments use vertical edges parallel to the z-axis and top/bottom surface parallel to xy-plane, which corresponds to the base angle $\alpha = 90°$. However, some prismatic structures (with arbitrary base angles) may also be used in some embodiments. Variation of the base angle value provides additional degree of freedom in the control of the nanojet beam radiation.

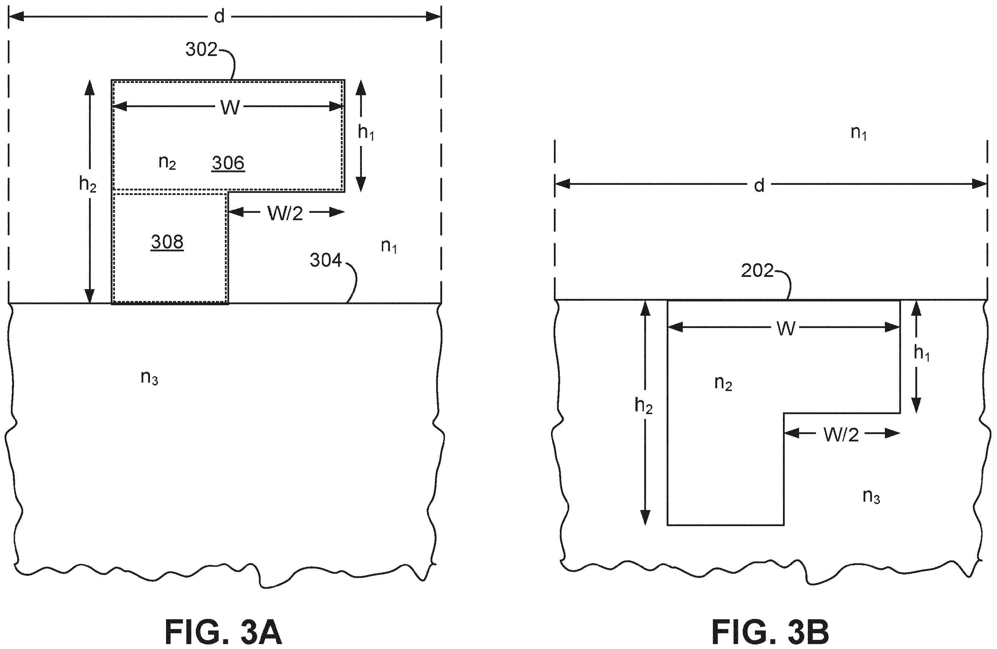

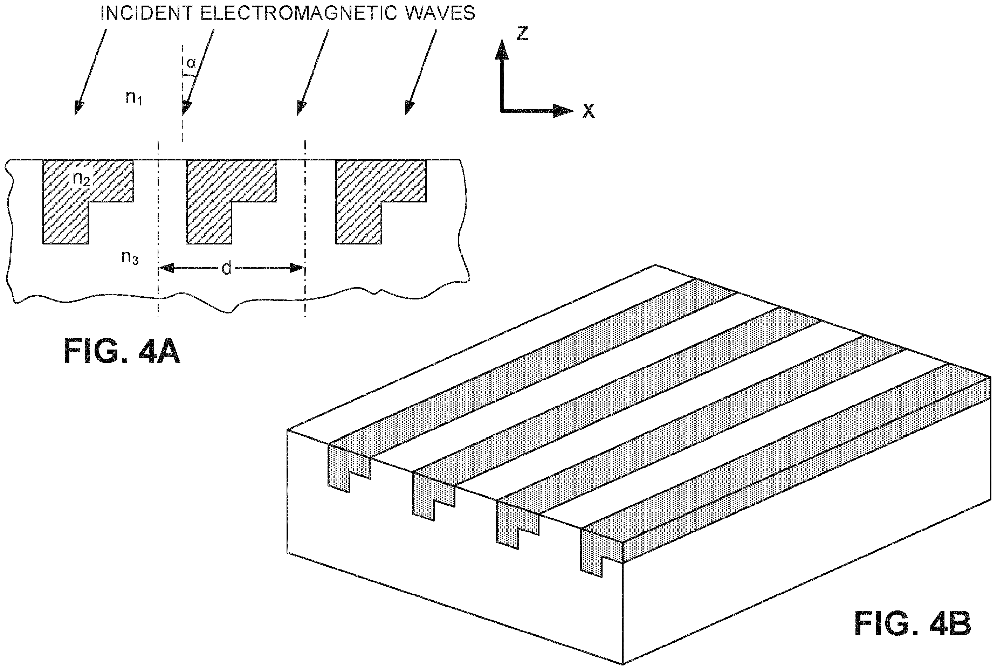

The topologies of two diffraction grating unit cells are illustrated in FIGs. 3A-3B. FIG. 3A shows a diffraction grating with step-like elements, such as element 302 with refractive index $n_2$, hosted by the homogeneous medium with refractive index $n_1$ and placed on a substrate surface 304 with refractive index $n_3$ ($n_{2,3} > n_1$). In some embodiments, $n_2 > n_3$. Grating element 302 has a stepped structure with a first step 306 having a greater width than a second step 308. The second step 308 is positioned on the outer surface of the substrate 304, and the first step extends outward (upward, in FIG. 3A) from the second step. In an example embodiment, a side edge (the left side edge in FIG. 3A) of the first step is aligned with the corresponding side edge of the second step. FIG. 3B corresponds to the periodic array of step-like optical elements with refractive index $n_2$ embedded into the substrate with refractive index $n_3$ ($n_2 > n_3 > n_1$) as illustrated in FIG. 2. The grating constant or the period of the grating is d. A linearly polarized plane wave may be incident on the grating from the top in a plane perpendicular to the grating. An embodiment of a grating with the second type of unit cell is presented in FIGs. 4A-4B.

In some embodiments, the step-like elements are made of a material having a refractive index greater than the refractive index of the substrate. Examples of materials that are used for the step-like elements include titanium dioxide ($TiO_2$) and silicon nitride ($Si_3N_4$).

In some embodiments, a diffraction grating may be configured for use with, for example $\lambda$=625nm or other wavelengths. The grating may in some examples have the following parameters: d=494nm, W=300nm, $h_1$=295nm, $h_2$=500nm, $n_1$=1.0, $n_2$=2.6, $n_3$=1.5154.

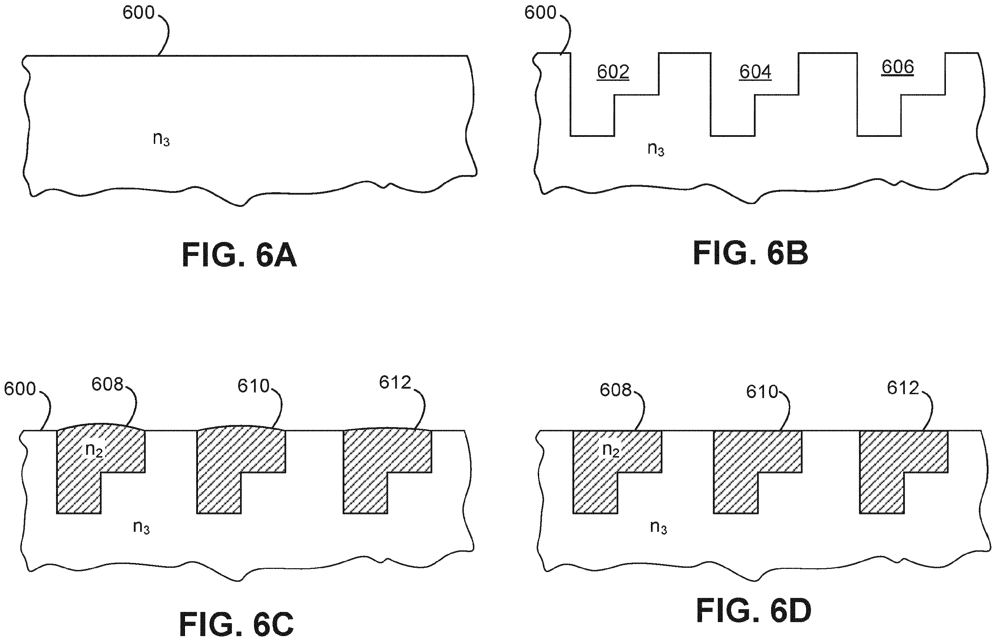

A method of making a diffraction grating according to some embodiments is illustrated in FIGs. 6A-6D. As illustrated in FIG. 6A, a substrate 600 is provided. Substrate 600 has first refractive index $n_3$. Substrate 600 may be, for example, a waveguide for a waveguide display. As shown in FIG. 6B, a plurality of stepped channels are formed in an outer surface of the substrate 600, for example by chemical or mechanical etching. As shown in FIG. 6C, each of the stepped channels is filled with a material having a second refractive index $n_2$ greater than the first refractive index $n_3$. In some embodiments, and optional polishing or other smoothing may be performed to provide a flush outer surface as shown in FIG. 6D. Such an outer surface may be more resistant to scratches and damage than a surface with protruding grating elements. Optionally, additional protective or optical layers or coatings (e.g. anti-reflective coatings) may be applied over the diffraction grating structure shown in FIG. 6D.

**Performance of Example Embodiments.**

Combinations of materials and dimensions of the elements of the grating for nanojet beam deflection may be selected according to equations and techniques described below.

The total response of the diffraction grating is influenced by the phenomenon of edge diffraction into the single element of the period, as described in A. Boriskin, V. Drazic, R. Keating, M. Damghanian, O. Shramkova, L. Blondé, "Near field focusing by edge diffraction," Opt. Lett., 2018 ("Boriskin et al."). Data shown below was obtained using the COMSOL Multiphysics software. The presented analysis of the fields and power distributions inside the meta-elements of the gratings helps explain the physics of the phenomenon and allows for selection of topologies that provide desired properties. The analysis assumes that the system is illuminated by a linearly-polarized plane wave E={0,0,1}. The effect of the parameters of the single meta-element on the functionality of the system is considered.

As described in Boriskin et al., the beam-forming phenomenon is associated with the edge of the system, and the nanojet beam radiation angle is defined by Snell's law. For the normal incidence of incident wave, the nanojet beam radiation angle for constitutive parts of the nanojet optical element can be determined as a function of the ratio between the refractive indexes of the media hosting the element: $n_L$ ($n_L$=$n_1$ for FIG. 3A and $n_L$=$n_3$ for FIG. 3B) and material of the optical element $n_H$ ($n_H$=$n_2$), and the base angle of the element. (The present analysis is for elements with vertical edges, where the base angle is equal to 90°). For the main part of the nanojet optical element with refractive index $n_H$ the nanojet beam radiation angle can be determined using the approximate formula:

$$\Theta_B \approx \frac{90^\circ - \Theta_{TIR}}{2},\qquad\qquad(1)$$

where $\Theta_{TIR} = \sin^{-1}\left(\dfrac{n_L}{n_H}\right)$ is the critical angle of refraction. For example embodiments, two opposite edges of the large step on the top of element with the width W and height $h_1$ will generate two similar nanojets, as illustrated in FIG. 2. One nanojet ($NJ_2$) will penetrate into the second step with the width W/2 without distortion. Another nanojet ($NJ_1$) will be reflected by the right edge of the lower step. A combination of these two nanojets with the nanojet generated by the second step will increase the intensity of the final beam obtained at the bottom surface of the metalens. Below are example formulas for parameters of the elements that may be used get such a nanojet combination inside the element. The cross point (hot spot) of the two symmetrical nanojets $NJ_1$ and $NJ_2$ generated by the external edges of the large block on the top of the element may be used to select the approximate height of this block which can be estimated as:

$$h_1 \approx \frac{W}{2\,tan\,\Theta_B}.\qquad\qquad(2)$$

Here W is the full width of the larger step on the top, which may be chosen taking into account the full size of the system or width of the unit cell in a case of diffraction grating (W<d). The height of the second step may be selected to correspond to the value providing the desirable angle of deviation for the total nanojet generated outside the element. To prevent the additional reflection of the nanojets by the left external wall of the optical element, the heights are selected such that $(h_2$-$h_1)$<$h_1$.

Using these optical elements to create the diffraction gratings, the dimensions of the step-like elements may be selected to increase the diffraction uniformity for inclined incidence of electromagnetic wave. To do this, it may be considered that for the inclined incidence, the angles of deviation of $NJ_1$ and $NJ_2$ may not be equal, and, depending on the angle of incidence, there may be multiple nanojet reflections by the edges of the optical elements.

A diffraction grating based on the step-like element may have the following performance characteristics. Below are provided the results of numerical simulations for a case of unit cell presented in FIG. 3B. The simulations assume that a linearly polarized plane wave is incident on the grating from the top in a plane perpendicular to the grating. The angles of the diffracted beams are not influenced by the structure of the optical elements. Rather, they are determined by the period of the grating, wavelength of the incident plane wave and angle of wave incidence and can be calculated according to the grating equation.

FIG. 4A is a cross sectional view of a portion of a diffraction grating configured according to FIG. 3B. Although three unit cells are illustrated in FIG. 4A, a diffraction grating according to some embodiments may include an array of tens, hundreds, or thousands of unit cells. FIG. 4B is a schematic cutaway perspective view of a portion of a diffraction grating as in FIG. 4A, illustrating four unit cells.

The performance of the grating depends on the polarization of the incident wave and parameters (dimensions, form and material) of the elements. Unlike a diffraction grating containing symmetrical single-material optical elements (regular structure of the same spacing), example diffraction gratings based on the double-material elements achieves nonsymmetrical distribution of an intensity ($T_j \neq T_{-j}$, $R_j \neq R_{-j}$, where j is the diffraction order) leading to the maximal grating efficiency for the desired diffraction order. In the case of elements with $W \leq \lambda W \leq \lambda$ the maximal input corresponds to the orders $\pm 1$.

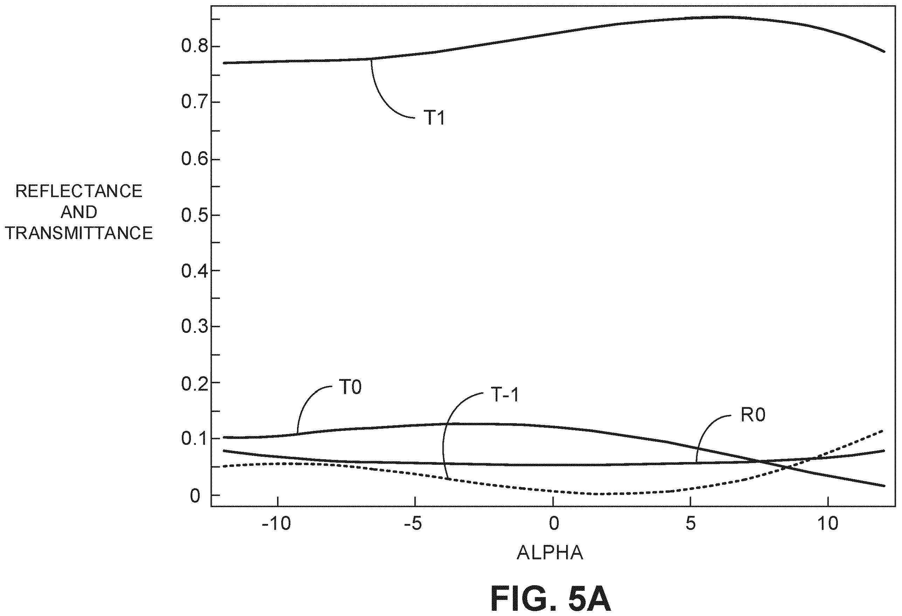

The computed reflectance and transmittance for TE incidence are plotted in FIGs. 5A-5C. These plots illustrate reflectance for zero order (R0) and transmittance for the minus-one order (T-1), zero order (T0) and plus-one order (T1) at $\lambda$=625$nm$ for a grating with the substrate with $n_3$=1.5154 (FIGs. 3B, 4A-4B) and with the period d=494nm and step-like optical elements configured for the refractive index of the element $n_2$. The full-wave electromagnetic analysis was done for the 2D array of double-material elements. The calculations assume that the system is infinite in X- and Y-directions. It can be seen that changing the refractive index $n_2$ modifies the performance of the grating and changes the refracted transmittance for the first order. The diffraction uniformity for systems with $n_2$=2.8 and $n_2$=2.6 is about 95%. Such properties of proposed diffraction grating topology can be used to couple light into a waveguide. It is evident from FIGs. 5A-5C that maximal intensity of the diffracted first order corresponds to the elements with higher refractive index $n_2$ ($n_2$=2.8) and lower size of constitutive parts. This may be understood as a result of a greater angle of nanojet deviation.

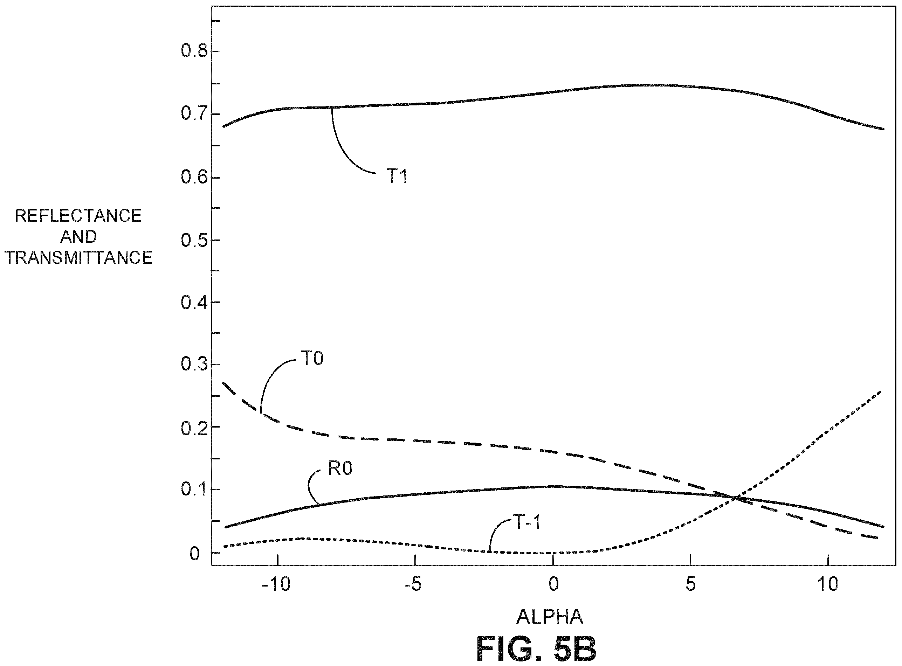

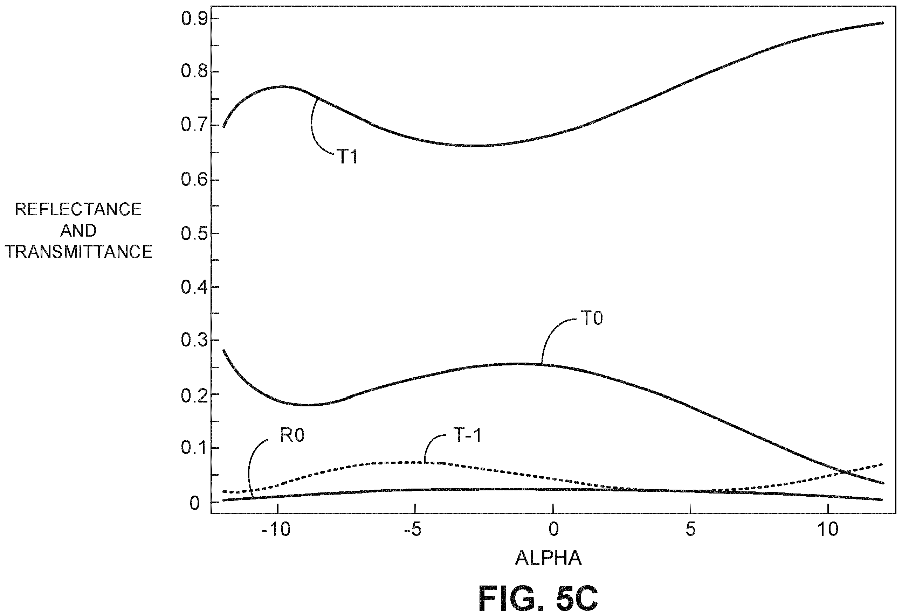

FIGs. 5A-5C are graphs showing simulated results for reflectance and transmittance plotted against angle of electromagnetic wave incidence $\alpha$. In all simulations, $\lambda$=625nm, d=494nm, $n_1$=1.0, $n_3$ =1.5154. In FIG. 5A, $n_2$=2.8, W=300nm, $h_1$=255nm, $h_2$=475nm. In FIG. 5B, $n_2$=2.6, W=300nm, $h_1$=295nm, $h_2$=500nm. In FIG. 5C, $n_2$=2.4, W= 380nm, $h_1$=420nm, $h_2$=680nm.

Comparing the power distribution for an example diffraction grating with the step-like elements at different angles of incidence, as shown in FIGs. 6A-6C, we can observe the redistribution of nanojets due to the reflection by the edges of the elements providing the uniform intensity of the transmitted first order. It can be seen that due to the refraction of the nanojets by the walls of the element with refraction index $n_2$ it is possible to change the position and direction of the nanojet beam at the bottom boundary (bottom edge of the second block with the width $W$/2 and height $h_2$-$h_1$) leading to the redistribution of the diffracted efficiency between the +first and -first diffraction orders. The analysis of the dependence of position (X- and Z-coordinate (bottom edge of the optical elements corresponds to Z=0, axis of the symmetry for the unit cell corresponds to X=d/2), in FIGs. 6A-6C) and peak power density of the nanojet hot spot in the case of a single unit cell shows the nanojet hot spots are situated inside the second smaller block of the element close to the bottom edge of the optical element.

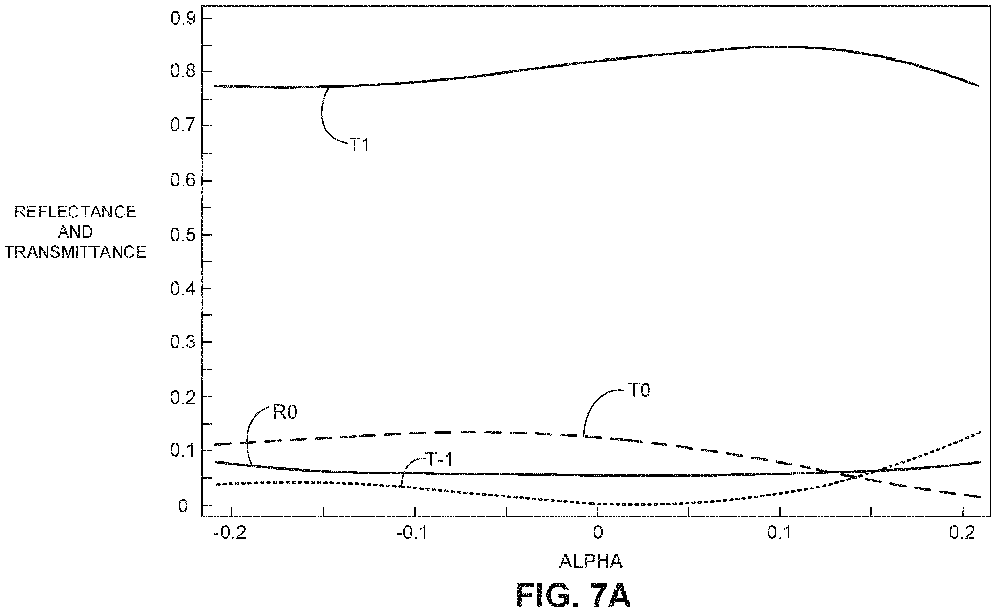

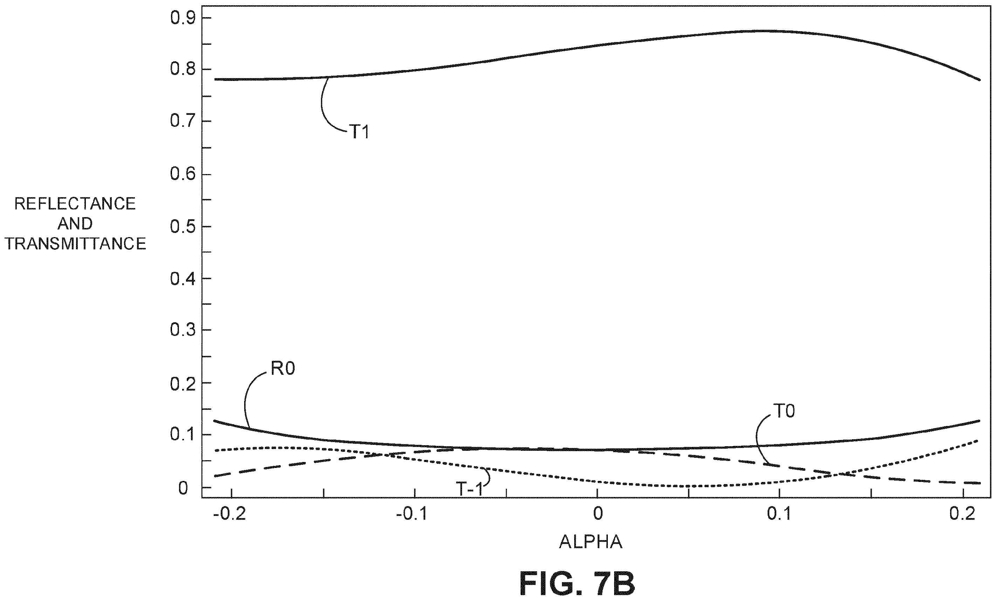

For use in a waveguide system for true color images, it may be desirable to configure a structure for at least three wavelengths. The computed reflectance and transmittance for blue and green wavelengths are plotted in FIGs. 7A and 7B. FIGs. 7A and 7B illustrate simulated values of reflectance and transmittance for zero order (R0) and transmittance for the minus-one order (T-1), zero order (T0) and plus-one order (T1), plotted against angle of electromagnetic wave incidence angle (a) for $n_1$=1.0, $n_2$=2.8, $n_3$ =1.5154. In FIG. 7A, $\lambda$=460nm, d=365.7nm, W=220nm, $h_1$=190nm, $h_2$=350nm. In FIG. 7B, $\lambda$=530nm, d=421.4 nm, W=260nm, $h_1$=220nm, $h_2$=400nm.

The diffraction uniformity for these systems with $n_2$=2.8 is also about 95%. For the simulations provided above it is assumed that all the materials are lossless and non-dispersive. The presented simulations can be adapted to dispersive material without dramatic change of refractive index for three colors. For all colors the system demonstrates very high transmittivity. In some embodiments, such a system of three waveguides may be used as the in-coupler for an augmented reality display without color correction. The high uniformity for all three colors avoids the dedication of the parts of the image signal to correct the brightness and color uniformity.

Example embodiments include step-like microelements that deviate the focused beam in the near zone.

In some embodiments, the periodic array of step-like elements embedded into the dielectric substrate can be considered as the diffraction grating with nonsymmetrical distribution of an intensity and leading to high grating efficiency for the desired diffraction order. Some embodiments provide high diffraction uniformity (e.g. >95%) for the corresponding order.

Some embodiments provide for relative ease of fabrication and robustness of the structure as a result of the flat surface of the diffraction grating. Fabrication may be performed, for example, by chemically or mechanically etching or otherwise forming a step-shaped channel in a substrate and filling the step-shaped channel with a material having a greater refractive index than the substrate.

In some embodiments, grating configuration for three wavelengths allows a system of three waveguides to be used as the in-coupler for an augmented reality display without color correction.

Example embodiments maybe implemented in various optical systems that operate to deviate an image or some light with a micro-structure, with advantages including simplicity of fabrication and robustness. Example application domains are head-up displays, solar cell panels for maximizing light collection, OLED display light extraction, among many others.

While the above examples refer primarily to the use of devices configured for visible light, other embodiments are configured for use with longer or shorter wavelengths, such as infrared or ultraviolet light, or for use with waves in other parts of the electromagnetic spectrum. Such embodiments may employ materials that are transparent to the wavelengths for which they are designed.

Although features and elements are described above in particular combinations, one of ordinary skill in the art will appreciate that each feature or element can be used alone or in any combination with the other features and elements.

**Claims**

1. A diffraction grating comprising:

   a substrate (206, 600) having an outer surface, the substrate having a first refractive index;
   a plurality of grating elements (202, 204, 302, 602, 604, 606), each grating element comprising a stepped channel inset into the substrate, the stepped channel having a second refractive index greater than the first refractive index;
   wherein the stepped channel is a two-step channel having a first step (208, 306) along the outer surface of the substrate and a second step (210, 308) extending inward from the first step, the first step having a greater width than the second step;
   **characterized in that** the height of the stepped channel is less than twice the height of the first step.

2. The diffraction grating of claim 1, wherein the stepped channel has an outer surface substantially coplanar with the outer surface of the substrate.

3. The diffraction grating of any one of claims 1-2, wherein the width of the first step (W) is substantially twice as great as the width of the second step.

4. The diffraction grating of any one of claims 1-3, wherein a side edge of the first step is substantially aligned with a side edge of the second step.

5. The diffraction grating of any one of claims 1-4, wherein the first step has a width W and a height $h_1$, wherein

$$h_1 \approx \frac{W}{2\, tan\, \Theta_B}$$

and wherein $\Theta_B \approx \dfrac{90° - \Theta_{TIR}}{2}$, with $\Theta_{TIR} = \sin^{-1}\left(\dfrac{n_L}{n_H}\right)$, where $n_L$ is the first refractive index and $n_H$ is the second refractive index.

6. The diffraction grating of any one of claims 1-5, wherein the substrate is a waveguide in a waveguide display.

7. A method of making a diffraction grating comprising:

   forming a plurality of stepped channels (202, 204, 302, 602, 604, 606) in an outer surface of a substrate (206, 600) having a first refractive index;
   wherein each stepped channel is a two-step channel having a first step (208, 306) along the outer surface of the substrate and a second step (210, 308) extending inward from the first step, the first step having a greater width (W) than the second step; and

filling each of the stepped channels with a material having a second refractive index greater than the first refractive index;

**characterized in that** the height (h2) of each stepped channel is less than twice the height (h1) of the first step.

8. The method of claim 7, wherein the width (W) of the first step is substantially twice as great as the width of the second step.

9. The method of any one of claims 7-8, wherein a side edge of the first step is substantially aligned with a side edge of the second step.

10. The method of any one of claims 7-9, wherein the first step has a width W and a height $h_1$ , wherein

$$h_1 \approx \frac{W}{2\,tan\,\Theta_B}$$

and wherein $\Theta_B \approx \dfrac{90^\circ - \Theta_{TIR}}{2}$ , with $\Theta_{TIR} = \sin^{-1}\left(\dfrac{n_L}{n_H}\right)$ , where $n_L$ is the first refractive index and $n_H$ is the second refractive index.

11. The method of any one of claims 7-10, wherein the substrate is a waveguide in a waveguide display.

12. An optical device comprising:

at least one waveguide (178, 180) comprising a substrate having an outer surface, the substrate having a first refractive index, the waveguide having an in-coupler (180, 184); and

an image generator (176) operative to direct light representing an image onto the in-coupler;

wherein the in-coupler comprises a plurality of grating elements (202, 204, 302, 602, 604, 606), each grating element comprising a stepped channel inset into the substrate, the stepped channel having a second refractive index greater than the first refractive index, the stepped channel being a two-step channel having a first step (208, 306) along the outer surface of the substrate and a second step (210, 308) extending inward from the first step, the first step having a greater width **(W)** than the second step; **characterized in that** the height of the stepped channel (h2) is less than twice the height (h1) of the first step.

**Patentansprüche**

1. Beugungsgitter, umfassend:

ein Substrat (206, 600), das eine Außenfläche aufweist, wobei das Substrat einen ersten Brechungsindex aufweist;

mehrere Gitterelemente (202, 204, 302, 602, 604, 606), wobei jedes Gitterelement einen in das Substrat eingelassenen gestuften Kanal umfasst, wobei der gestufte Kanal einen zweiten Brechungsindex aufweist, der größer als der erste Brechungsindex ist;

wobei der gestufte Kanal ein zweistufiger Kanal ist, der eine erste Stufe (208, 306) entlang der Außenfläche des Substrats und eine zweite Stufe (210, 308), die sich von der ersten Stufe nach innen erstreckt, aufweist, wobei die erste Stufe eine größere Breite als die zweite Stufe aufweist;

**dadurch gekennzeichnet, dass** die Höhe des gestuften Kanals weniger als das Zweifache der Höhe der ersten Stufe beträgt.

2. Beugungsgitter nach Anspruch 1, wobei der gestufte Kanal eine Außenfläche aufweist, die im Wesentlichen koplanar mit der Außenfläche des Substrats verläuft.

3. Beugungsgitter nach einem der Ansprüche 1 und 2, wobei die Breite der ersten Stufe (W) im Wesentlichen zweimal so groß wie die Breite der zweiten Stufe ist.

4. Beugungsgitter nach einem der Ansprüche 1-3, wobei ein seitlicher Rand der ersten Stufe im Wesentlichen auf einen seitlichen Rand der zweiten Stufe ausgerichtet ist.

5. Beugungsgitter nach einem der Ansprüche 1-4, wobei die erste Stufe eine Breite W und eine Höhe $h_1$ aufweist, wobei

$$h_1 \approx \frac{W}{2 \tan \Theta_B}$$

und wobei $\Theta_B \approx \frac{90° - \Theta_{TIR}}{2}$, wobei $\Theta_{TIR} = \sin^{-1}\left(\frac{n_L}{n_H}\right)$, wobei $n_L$ der erste Brechungsindex ist und $n_H$ der zweite Brechungsindex ist.

6. Beugungsgitter nach einem der Ansprüche 1-5, wobei das Substrat ein Wellenleiter in einem Wellenleiter-Display ist.

7. Verfahren zum Herstellen eines Beugungsgitters, umfassend:

Bilden mehrerer gestufter Kanäle (202, 204, 302, 602, 604, 606) in einer Außenfläche eines Substrats (206, 600), das einen ersten Brechungsindex aufweist;
wobei jeder gestufte Kanal ein zweistufiger Kanal ist, der eine erste Stufe (208, 306) entlang der Außenfläche des Substrats und eine zweite Stufe (210, 308), die sich von der ersten Stufe nach innen erstreckt, aufweist, wobei die erste Stufe eine größere Breite (W) als die zweite Stufe aufweist; und
Füllen jedes der abgestuften Kanäle mit einem Material, das einen zweiten Brechungsindex aufweist, der größer als der erste Brechungsindex ist;
**dadurch gekennzeichnet, dass** die Höhe ($h_2$) jedes gestuften Kanals weniger als das Zweifache der Höhe ($h_1$) der ersten Stufe beträgt.

8. Verfahren nach Anspruch 7, wobei die Breite (W) der ersten Stufe im Wesentlichen zweimal so groß wie die Breite der zweiten Stufe ist.

9. Verfahren nach einem der Ansprüche 7 und 8, wobei ein seitlicher Rand der ersten Stufe im Wesentlichen auf einen seitlichen Rand der zweiten Stufe ausgerichtet ist.

10. Verfahren nach einem der Ansprüche 7-9, wobei die erste Stufe eine Breite W und eine Höhe $h_1$ aufweist, wobei

$$h_1 \approx \frac{W}{2 \tan \Theta_B}$$

und wobei $\Theta_B \approx \frac{90° - \Theta_{TIR}}{2}$, wobei $\Theta_{TIR} = \sin^{-1}\left(\frac{n_L}{n_H}\right)$, wobei $n_L$ der erste Brechungsindex ist und $n_H$ der zweite Brechungsindex ist.

11. Verfahren nach einem der Ansprüche 7-10, wobei das Substrat ein Wellenleiter in einem Wellenleiter-Display ist.

12. Optische Vorrichtung, umfassend:

mindestens einen Wellenleiter (178, 180), der ein Substrat umfasst, das eine Außenfläche aufweist, wobei das Substrat einen ersten Brechungsindex aufweist, wobei der Wellenleiter einen Einkoppler (180, 184) aufweist;
einen Bildgenerator (176), der dafür ausgelegt ist, Licht, das ein Bild darstellt, auf den Einkoppler zu richten;
wobei der Einkoppler mehrere Gitterelemente (202, 204, 302, 602, 604, 606) umfasst, wobei jedes Gitterelement einen in das Substrat eingelassenen gestuften Kanal umfasst, wobei der gestufte Kanal einen zweiten Brechungsindex aufweist, der größer als der erste Brechungsindex ist, wobei der gestufte Kanal ein zweistufiger Kanal ist, der eine erste Stufe (208, 306) entlang der Außenfläche des Substrats und eine zweite Stufe (210, 308), die sich von der ersten Stufe nach innen erstreckt, aufweist, wobei die erste Stufe eine größere Breite als die zweite Stufe aufweist, wobei die erste Stufe eine größere Breite (W) als die zweite Stufe aufweist,

**dadurch gekennzeichnet, dass** die Höhe des gestuften Kanals ($h_2$) weniger als das Zweifache der Höhe ($h_1$) der ersten Stufe beträgt.

**Revendications**

1. Réseau de diffraction comprenant :

   un substrat (206, 600) présentant une surface extérieure, le substrat présentant un premier indice de réfraction ;
   une pluralité d'éléments de réseau (202, 204, 302, 602, 604, 606), chaque élément de réseau comprenant un canal étagé inséré dans le substrat, le canal étagé présentant un deuxième indice de réfraction supérieur au premier indice de réfraction ;
   dans lequel le canal étagé est un canal à deux étages présentant un premier étage (208, 306) le long de la surface extérieure du substrat et un deuxième étage (210, 308) s'étendant vers l'intérieur depuis le premier étage, le premier étage présentant une largeur plus grande que celle du deuxième étage ;
   **caractérisé en ce que** la hauteur du canal étagé est inférieure à deux fois la hauteur du premier étage.

2. Réseau de diffraction selon la revendication 1, dans lequel le canal étagé présente une surface extérieure sensiblement coplanaire avec la surface extérieure du substrat.

3. Réseau de diffraction selon la revendication 1 ou 2, dans lequel la largeur du premier étage (W) est sensiblement deux fois plus grande que la largeur du deuxième étage.

4. Réseau de diffraction selon l'une quelconque des revendications 1 à 3, dans lequel un bord latéral du premier étage est sensiblement aligné sur un bord latéral du deuxième étage.

5. Réseau de diffraction selon l'une quelconque des revendications 1 à 4, dans lequel le premier étage présente une largeur $W$ et une hauteur $h_1$, dans lequel

$$h_1 \approx \frac{W}{2 tan\Theta_B}$$

et dans lequel $\Theta_B \approx \frac{90° - \Theta_{TIR}}{2}$, avec $\Theta_{TIR} = sin^{-1}\left(\frac{n_L}{n_H}\right)$, où $n_L$ est le premier indice de réfraction et $n_H$ est le deuxième indice de réfraction.

6. Réseau de diffraction selon l'une quelconque des revendications 1 à 5, dans lequel le substrat est un guide d'onde dans un dispositif d'affichage à guide d'onde.

7. Procédé de réalisation d'un réseau de diffraction comprenant :

   la formation d'une pluralité de canaux étagés (202, 204, 302, 602, 604, 606) dans une surface extérieure d'un substrat (206, 600) présentant un premier indice de réfraction ;
   dans lequel chaque canal étagé est un canal à deux étages présentant un premier étage (208, 306) le long de la surface extérieure du substrat et un deuxième étage (210, 308) s'étendant vers l'intérieur depuis le premier étage, le premier étage présentant une largeur (W) plus grande que celle du deuxième étage ; et
   le remplissage de chacun des canaux étagés avec un matériau présentant un deuxième indice de réfraction supérieur au premier indice de réfraction ;
   **caractérisé en ce que** la hauteur ($h_2$) de chaque canal étagé est inférieure à deux fois la hauteur ($h_1$) du premier étage.

8. Procédé selon la revendication 7, dans lequel la largeur (W) du premier étage est sensiblement deux fois plus grande que la largeur du deuxième étage.

9. Procédé selon l'une quelconque des revendications 7 et 8, dans lequel un bord latéral du premier étage est sensiblement aligné sur un bord latéral du deuxième étage.

**10.** Procédé selon l'une quelconque des revendications 7 à 9, dans lequel le premier étage présente une largeur $W$ et une hauteur $h_1$, dans lequel

$$h_1 \approx \frac{W}{2tan\Theta_B}$$

et dans lequel $\Theta_B \approx \frac{90° - \Theta_{TIR}}{2}$ , avec $\Theta_{TIR} = sin^{-1}\left(\frac{n_L}{n_H}\right)$ , où $n_L$ est le premier indice de réfraction et $n_H$ est le deuxième indice de réfraction.

**11.** Procédé selon l'une quelconque des revendications 7 à 10, dans lequel le substrat est un guide d'onde dans un dispositif d'affichage à guide d'onde.

**12.** Dispositif optique comprenant :

au moins un guide d'onde (178, 180) comprenant un substrat présentant une surface extérieure, le substrat présentant un premier indice de réfraction, le guide d'onde présentant un coupleur d'entrée (180, 184) ; et un générateur d'image (176) fonctionnel pour diriger une lumière représentant une image sur le coupleur d'entrée ;
dans lequel le coupleur d'entrée comprend une pluralité d'éléments de réseau (202, 204, 302, 602, 604, 606), chaque élément de réseau comprenant un canal étagé inséré dans le substrat, le canal étagé présentant un deuxième indice de réfraction supérieur au premier indice de réfraction, le canal étagé étant un canal à deux étages présentant un premier étage (208, 306) le long de la surface extérieure du substrat et un deuxième étage (210, 308) s'étendant vers l'intérieur depuis le premier étage, le premier étage présentant une largeur (W) plus grande que celle du deuxième étage ;
**caractérisé en ce que** la hauteur du canal étagé ($h_2$) est inférieure à deux fois la hauteur ($h_1$) du premier étage.

**FIG. 1A**

**FIG. 1B**

**FIG. 1C**

EP 4 154 043 B1

FIG. 1D

FIG. 1E

IMAGE GENERATOR

EP 4 154 043 B1

FIG. 2

FIG. 3B

FIG. 3A

INCIDENT ELECTROMAGNETIC WAVES

**FIG. 4A**

**FIG. 4B**

EP 4 154 043 B1

**FIG. 5A**

**FIG. 5B**

**FIG. 5C**

EP 4 154 043 B1

**FIG. 6A**

**FIG. 6B**

**FIG. 6C**

**FIG. 6D**

**FIG. 7A**

EP 4 154 043 B1

**FIG. 7B**

EP 4 154 043 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 20305538
- US 7394535 B
- WO 2017180403 A
- KR 20190073107 A
- WO 2019175010 A1
- US 20160231568 A

**Non-patent literature cited in the description**

- **J. YI et al.** Coherent beam control with an all-dielectric transformation optics based lens. *Scientific Reports*, 2016, vol. 6
- **YA. ZHAO**. Beam bending via plasmonic lenses. *Opt. Expr.*, 2010, vol. 18 (22), 23458
- **YO. C. JUN**. Optical Manipulation with Plasmonic Beam Shaping Antenna Structures. *Advances in Optoelectronics*, vol. 2012
- **M. KHORASANINEJAD et al.** Super-Dispersive Off-Axis Meta-Lenses for Compact High Resolution Spetrcoscopy. *Nano Lett.*, 2016, vol. 16 (6), 3732
- **LIU Z. et al.** Tuning the focus of a plasmonic lens by the incident angle. *Appl. Phys. Lett.*, 2006, vol. 88, 171108
- **Y. CHEN et al.** Engineering the phase front of light with phase-change material based planar lenses. *Sci. Rep.*, 2015, vol. 5
- **S.-C. KONG et al.** Photonic nanojet-enabled optical data storage. *Opt. Express*, 2008, vol. 16 (18)
- **V. PACHECO-PENA et al.** Terajets produced by dielectric cuboids. *Applied Phys. Lett.*, 2014, vol. 105, 084102
- **V. PACHECO-PENA et al.** Multifrequency focusing and wide angular scanning of terajets. *Opt. Lett.*, 2015, vol. 40 (2), 245-248
- **A.V. ITAGI et al.** Optics of photonic nanojets. *J. Opt. Soc. Am. A*, 2005, vol. 22, 2847
- **A. HEIFETZ et al.** Subdiffraction optical resolution of a gold nanosphere located within the nanojet of a Mie-resonant dielectric microsphere. *Opt. Express*, 2007, vol. 15, 17334
- **A. DEVILEZ et al.** Three-dimensional subwavelength confinement of light with dielectric microspheres. *Opt. Express*, vol. 17, 2089
- **YU SHEN et al.** Ultralong photonic nanojet formed by a two-layer dielectric microsphere. *Opt. Lett.*, 2014, vol. 39 (14), 4120
- **C.M. RIUZ et al.** Detection of embedded ultra-subwavelength-thin dielectric features using elongated photonic nanojets. *Opt. Express*, 2010, vol. 18 (16), 16805
- **YU E. GEINTS et al.** Photonic nanojet calculations in layered radially inhomogeneous micrometer-sized spherical particles. *J. Opt. Soc. Am. B*, 2011, vol. 28 (8), 1825
- **G. GU et al.** Super-long photonic nanojet generated from liquid-filled hollow microcylinder. *Opt. Lett.*, 2015, vol. 40 (4), 625
- **X. MAO et al.** Tunable photonic nanojet formed by generalized Luneburg lens. *Opt. Expre.*, 2015, vol. 23 (20), 026426
- **A. BORISKIN ; V. DRAZIC ; R. KEATING ; M. DAMGHANIAN ; O. SHRAMKOVA ; L. BLONDÉ**. Near field focusing by edge diffraction. *Opt. Lett.*, 2018